# EUROPÄISCHE PATENTSCHRIFT

(11) **EP 2 258 640 B1**
(45) Veröffentlichungstag und Bekanntmachung des Hinweises auf die Patenterteilung: **06.08.2014**
(21) Anmeldenummer: 10005185.3
(22) Anmeldetag: 18.05.2010
(51) Int. Cl.: B65G 53/10, B65G 53/46, B65G 53/52

(54) **Fördergutschleuse für pneumatische Förderung**
Loads sluice for pneumatic transport
Ecluse pour produits à transporter pour le transport pneumatique

(30) Priorität: 04.06.2009 DE 202009007856 U
(43) Veröffentlichungstag der Anmeldung: 08.12.2010
(73) Patentinhaber: Claudius Peters Projects GmbH, 21614 Buxtehude (DE)
(72) Erfinder: Fischer, Volker, 21643 Goldbeck (DE)
(74) Vertreter: Glawe, Delfs, Moll

(56) Entgegenhaltungen:
- WO-A2-2009/103697
- US-A- 2 693 283

## Beschreibung

Die Erfindung betrifft eine Fördergutschleuse zur Einbringung von Schüttgut in eine pneumatische Förderanlage.

Bei pneumatischen Förderanlagen wird Schüttgut durch eine Förderleitung mit Hilfe eines unter Druck stehenden Fördermediums gefördert. Bei diesem Fördermedium handelt es sich um Gas, in der Regel um Luft.

Indem das unter Druck stehende Fördermedium entlang der Förderleitung bewegt wird, wird in der Förderleitung befindliches Schüttgut mitgerissen, d.h. mit dem Fördermedium mitbewegt.

Die pneumatische Förderung ist nur möglich, wenn an der Aufgabestelle, d.h. der Bereich der Förderleitung, in dem das Schüttgut eingebracht wird, ein Überdruck gegenüber dem Bereich der Förderleitung, in dem das Schüttgut wieder entnommen wird, herrscht. Der Druck im Bereich der Aufgabestelle ist dabei in der Regel höher als der Umgebungsdruck. Zu Beginn der Förderung muss das Schüttgut in die Förderleitung eingespeist werden, und zwar gegen den in der Förderleitung anstehenden Druck.

Zu diesem Zweck sind im Stand der Technik Schleusen unterschiedlicher Bauart bekannt.

Beispielsweise sind Zellenradschleusen bekannt, bei denen die einzelnen Zellen unter Umgebungsdruck mit Schüttgut befüllt werden. Durch Drehung des Zellenrades wird anschließend eine befüllte Zelle gegenüber der Umgebung abgedichtet und zur Förderleitung hin geöffnet. Es findet ein Druckausgleich zwischen der Zelle und der Förderleitung statt und das Schüttgut kann in die Förderleitung gelangen.

Die Zelle, in der nun der Druck der Förderleitung herrscht, wird durch weitere Drehung wieder abgeschlossen und zur Umgebung hin geöffnet. Dort kommt es erneut zu einem Druckausgleich, bei dem in der Regel eine hohe Staubentwicklung festzustellen ist. Von dem Schüttgut in den Zellen verbleibende Staubpartikel werden nämlich mit dem expandierenden Gas herausgeschleudert.

Außerdem kommt es bei beiden beschriebenen Druckausgleichen zu hohen Strömungsgeschwindigkeiten, welche einen hohen Verschleiß zur Folge haben. Indem außerdem zellenweise das unter Druck stehende Fördermedium gegenüber der Umgebung expandiert, kommt es auch zu einem Druckverlust in der Förderleitung. Primärer Nachteil ist der Verlust von Gas, welches in Form von Leckagegas der Förderluft verloren geht.

Ebenfalls bekannt sind Schleusen, bei denen eine stationäre Schleusenkammer mit einem Einlass- und einem Auslassventil vorgesehen ist. Durch das Einlassventil kann Schüttgut unter Umgebungsdruck in die Schleusenkammer gelangen. Nach Verschließen des Einlassventils wird ein Druckausgleich der Schleusenkammer mit der Förderleitung erreicht, entweder durch Öffnen des Auslassventils oder durch ein zusätzliches Druckausgleichsventil. Nach dem Öffnen des Auslassventils kann das Schüttgut in die Förderleitung gelangen und die Schleuse wieder in den Ausgangszustand zurückgefahren werden. Dabei können - sofern kein separater Druckausgleich mit der Umgebung erfolgt - die gleichen Probleme wie bei der Zellenradschleuse auftreten, sprich Staubentwicklung und hohe Strömungsgeschwindigkeiten.

Für einen Druckausgleich müssen an der Schleusenkammer zusätzliche Ventile vorgesehen sein, die insbesondere in Anbetracht der Staubbelastung durch das Schüttgut sehr störanfällig sind. Außerdem kommt es aufgrund des meist geringen freien Querschnitts während des Öffnungsvorganges der Druckausgleichsventile zu hohen Strömungsgeschwindigkeiten. Auch hier kommt es somit zu Verlusten von Gas.

Das Dokument US 2 151 514 zeigt eine gattungsgemäße Fördergutschleuse.

Der Erfindung liegt die Aufgabe zugrunde, eine Fördergutschleuse für pneumatische Förderleitungen zu schaffen, die die Nachteile der im Stand der Technik bekannten Vorrichtungen nicht oder nur noch im verminderten Maße aufweist.

Gelöst wird diese Aufgabe durch eine Fördergutschleuse gemäß dem Hauptanspruch. Vorteilhafte Weiterbildungen sind Gegenstand der abhängigen Ansprüche.

Demnach betrifft die Erfindung eine Fördergutschleuse zur Einbringung von Schüttgut in eine pneumatische Förderanlage, die eine einen Schleusenraum zur Aufnahme von Schüttgut umschließende Schleusenkammer mit einer durch ein erstes Absperrorgan verschließbaren Einlassöffnung und einer durch ein zweites Absperrorgan verschließbaren Auslassöffnung, sowie eine Steuerungseinrichtung zur Steuerung der Absperrorgane umfasst, wobei eine Zusatzkammer vorgesehen ist, die einen Zusatzraum umschließt, der mit dem Schleusenraum druckausgleichend verbunden ist, so dass der Zusatzraum und der Schleusenraum bei geschlossenen Absperrorganen einen druckdichten Druckraum bilden, wobei wenigstens eine Wand des Zusatzraums durch eine verformbare Membran gebildet ist und durch einen durch die Steuerungseinrichtung ansteuerbaren, außerhalb des Zusatzraumes angeordneten und auf die z.B. elastisch verformbare Membran wirkenden Kolben variabel verformbar ist.

"Druckausgleichend" im Sinne dieser Erfindung bedeutet, dass die so verbundenen Räume im Prinzip immer den gleichen Druck aufweisen. Eine spontane Druckdifferenz zwischen zwei druckausgleichend verbundenen Räumen wird durch eine entsprechende Strömung innerhalb kurzer Zeit ausgeglichen. Zwei druckausgleichend verbundene Räume - in diesem Fall der Schleusenraum und der Zusatzraum - bilden also einen gemeinsamen Druckraum, in dem im Wesentlichen überall der gleiche Druck herrscht.

"Verformbar" bedeutet im Sinne der Erfindung, dass die Membran sich verformen lässt ohne Bruch. Insbesondere sind damit auch elastische Membranen umfasst, wobei es aber auf den Grad der Elastizität nicht ankommt; es sind also auch plastisch verformbare Membrane umfasst.

Indem wenigstens eine Wand der Zusatzkammer variabel verformbar ist, kann das Volumen des Zusatzraums bzw. das Volumen des Druckraums verändert werden. Sofern der Druckraum gegenüber der Förderleitung und der Umgebung druckdicht verschlossen ist, kann das im Druckraum befindliche Gas komprimiert oder entspannt werden. Es erfolgt also eine Anpassung des Druckes im Druckraum ohne eine Öffnung nach außen, über die Veränderung der Geometrie.

In einem Ausgangszustand entspricht der Druck im Druckraum nahezu dem Umgebungsdruck. In diesem Zustand ist es möglich, das Absperrorgan an der Einlassöffnung zu öffnen und Schüttgut in den Schleusenraum einzubringen. In einem Endzustand entspricht der Druck dem Druck in der Förderleitung und es kann die Auslassöffnung geöffnet werden. Bei Öffnung eines der beiden Absperrorgane findet dann kein Druckausgleich mehr statt. Hohe Strömungsgeschwindigkeiten - und damit auch Verschleiß - sowie die Aufwirbelung von Staub werden vermieden. Außerdem werden keine störanfälligen Druckausgleichsventile benötigt. Ein Druck- und Volumenverlust in der Förderleitung wird ebenfalls vermieden.

Bei der erfindungsgemäßen Fördergutschleuse gelangt das Schüttgut ausschließlich in den Schleusenraum. Der Zusatzraum dient lediglich der Veränderung des Volumens des gemeinschaftlichen Druckraums. Schüttgut gelangt also nicht in den Zusatzraum. Da im Zusatzraum kein Schüttgut vorhanden ist, kommt die verformbare Membran auch nicht mit solchem in Kontakt. Verschleiß der verformbaren Membran durch Kontakt mit Schüttgut ist somit minimiert.

Die Steuerungseinrichtung ist dazu ausgebildet, zumindest die Absperrorgane an der Ein- bzw. Auslassöffnung, sowie den Kolben zu steuern und so einen Schleusenzyklus durchzuführen. Dabei kann die Steuerungseinrichtung so ausgebildet sein, dass sie den folgenden Schleusenzyklus steuern kann:

Im Ausgangszustand herrscht im Druckraum Umgebungsdruck. Des Weiteren ist das Volumen des Druckraums maximal, d.h. der Kolben, der der Verformung der Elastomermembran der Zusatzkammer dient, ist so verfahren, dass das Volumen des Zusatzraums maximal oder nahezu maximal ist. Die Steuerungseinrichtung öffnet nun das Absperrorgan in der Einlassöffnung und Schüttgut gelangt in den Schleusenraum. Nachdem im Schleusenraum ein gewisser Füllstand erreicht ist, was von der Steuerungseinrichtung bspw. über einen Füllstandssensor oder über Messung der Füllzeit bestimmt werden kann, verschließt die Steuerungseinrichtung das Absperrorgan wieder. Der Druckraum ist nun druckdicht.

Durch ein entsprechendes Ansteuern des Kolbens durch die Steuerungseinrichtung wird die verformbare Membran so verformt, dass das Volumen des Zusatzraums abnimmt. Das sich im Druckraum befindliche Gas wird aufgrund dieser Volumenänderung komprimiert, d.h. der Druck im Druckraum nimmt zu.

Sobald der Druck im Druckraum im Wesentlichen dem Druck der Förderleitung entspricht, kann die Steuerungseinrichtung das Absperrorgan an der Austrittsöffnung zur Förderleitung hin öffnen ("Endzustand"). Der Druck im Druckraum kann der Steuerungseinrichtung dabei über eine Druckmesseinrichtung mitgeteilt werden; es ist aber auch möglich, dass die Steuerungseinrichtung über eine Detektierung der Position des Kolbens auf den Druck im Druckraum schließen bzw. ihn berechnen kann. Beim Öffnen des Absperrorgans an der Austrittsöffnung findet ein Druckausgleich nicht statt. Hohe Strömungsgeschwindigkeiten, die zum Verschleiß führen können, werden also grundsätzlich vermieden. Nachdem das Schüttgut durch die Auslassöffnung gelangt ist, und der Kolben in eine Position verfahren wurde, die für den nächsten Zyklus benötigt wird, verschließt die Steuerungseinrichtung die Auslassöffnung durch das dazugehörige Absperrorgan wieder.

Durch das Verfahren des Kolbens in seine Ausgangslage aufgrund entsprechender Ansteuerung durch die Steuerungseinrichtung wird das Volumen im Druckraum wieder vergrößert, womit der Druck im Druckraum abnimmt. Sobald der Zieldruck (i.d.R. Umgebungsdruck) erreicht wird, kann die Steuerungseinrichtung mit einem neuen Schleusenzyklus beginnen.

Sofern die Einlass- oder Auslassöffnung geöffnet ist, lässt sich der Kolben im Übrigen verfahren, ohne dass es zu einer Änderung des Drucks im Druckraum bzw. einer merklichen Druckausgleichsströmung kommt. Aufgrund des variierenden Anteils an nicht-komprimierbarem Schüttgut im Druckraum kann die Position des Kolbens am Ende des beschriebenen Schleusenzyklus von der Ausgangsposition zu Beginn abweichen. Diese Positionsabweichung kann bevorzugt durch die Steuerungseinrichtung detektiert werden und bei geöffneter Einlassöffnung dann ohne weiteres durch Verfahren des Kolbens in die Ausgangsposition beseitigt werden.

Da eine eventuelle Staubentwicklung beim Öffnen des Absperrorgans der Auslassöffnung weniger kritisch ist, kann auch bei der erfindungsgemäßen Fördergutschleuse der Druckausgleich mit der Förderleitung wenigstens teilweise durch Öffnen dieses Absperrorgans und dadurch verursachte Druckausgleichsströmungen erreicht werden. Die Steuerungsvorrichtung kann demnach so ausgebildet sein, dass auf eine Druckanpassung im Druckraum auf den Druck in der Förderleitung durch entsprechendes Verfahren des Kolbens ganz oder teilweise verzichtet wird.

Die erfindungsgemäße Fördergutschleuse eignet sich im Übrigen auch dazu, Schüttgut aus einer pneumatischen Förderanlage auszutragen. Dazu kann sie mit ihrer Einlassöffnung an die Förderleitung angeschlossen werden, während die Auslassöffnung mit Umgebungsdruck beaufschlagt ist. Die Steuerungseinrichtung ist dann an die geänderten Druckverhältnisse anzupassen. Die Förderschleuse eignet sich auch zum Eintragen von Schüttgut in andere Behälter, z.B. Reaktoren. Dies ist besonders vorteilhaft, wenn die Behälter unter Druck betrieben werden.

Es ist besonders bevorzugt, wenn die Einlassöffnung geodätisch oberhalb der Auslassöffnung angeordnet ist. Besonders bevorzugt ist es, wenn sich die Auslassöffnung am tiefsten Punkt der Schleusenkammer befindet. Dadurch kann sichergestellt werden, dass das Einbringen und Austragen von Schüttgut in den Schleusenraum allein aufgrund von Schwerkraft erfolgen kann. Zusätzliche Maßnahmen zur Förderung des Schüttguts in und aus der Schleusenkammer sind somit nicht erforderlich.

Der Schleusenraum und der Zusatzraum können durch eine Druckausgleichsleitung miteinander verbunden sein. Um den Zusatzraum vor Staub zu schützen, kann ein Staubfilter in der Druckausgleichsleitung vorgesehen sein. Der Querschnitt der Druckausgleichsleitung ist bevorzugt so bemessen, dass es bei einem Druckausgleich zwischen Schleusenraum und Zusatzraum nur zu geringen Strömungsgeschwindigkeiten kommt.

Besonders bevorzugt ist es, wenn Schleusenraum und Zusatzraum integral miteinander verbunden sind. "Integral verbunden" bedeutet, dass sich der Zusatzraum mit einer seiner Seiten direkt am Schleusenraum anschließt und in diesem Bereich keine trennende Wand vorgesehen ist. In diesem Fall wird der Druckraum also allein durch Zusatz- und Schleusenraum gebildet, die direkt ineinander übergehen. Indem der Druckausgleich zwischen Zusatz- und Schleusenraum nicht mehr durch eine Druckausgleichsleitung geschieht, können Strömungsverluste fast vollständig vermieden werden. Zu beachten ist, dass auch bei der integralen Verbindung zwischen Zusatzraum und Schleusenraum lediglich der Schleusenraum das Schüttgut aufnimmt. Der Zusatzraum bleibt schüttgutfrei.

Es ist bevorzugt, wenn an der Schleusenkammer ein Füllstandssensor zur Messung des Füllstandes im Schleusenraum vorgesehen ist. Durch einen solchen Füllstandssensor kann sichergestellt werden, dass eine maximal zulässige Füllhöhe im Schleusenraum nicht
überschritten wird und insbesondere der Zusatzraum frei von Schüttgut bleibt. Der Füllstandssensor kann die Füllhöhe direkt messen. Es ist aber auch möglich, die Füllhöhe an der Veränderung des Gesamtgewichtes der Schleusenkammer abzulesen. In diesem Fall ist der Füllstandssensor als Gewichtssensor ausgebildet.

Vorzugsweise ist eine Druckmesseinrichtung zur Messung des Drucks im Druckraum vorgesehen. Dieser Drucksensor kann der Steuerung dienen, da über ihn festgestellt werden kann, ob und wenn ja, in welche Richtung der Kolben verfahren werden muss. Besonders bevorzugt ist es, wenn die Druckmesseinrichtung an der Zusatzkammer vorgesehen ist und zur Messung des Drucks im Zusatzraum ausgebildet ist. Da im Zusatzraum grundsätzlich kein Schüttgut zu erwarten ist, wird die Druckmesseinrichtung vor mechanischem Verschleiß bewahrt. Des Weiteren können Druckmesseinrichtungen zur Messung des Umgebungsdrucks und/oder des Drucks in der Förderleitung vorgesehen sein. Die Steuerungseinrichtung kann dann das Verfahren des Kolbens anhand der Druckdifferenzen zwischen Druckraum und Umgebung bzw. Druck in der Förderleitung steuern. Sofern an der pneumatischen Förderanlage bereits eine geeignete Druckmesseinrichtung vorhanden ist, kann auch dessen Messwert für die Steuerung der Fördergutschleuse verwendet werden. Außer einer solchen druckgeführten Steuerungseinrichtung kann die Steuerungseinrichtung auch dazu ausgebildet sein, durch Parameter wie verbleibender Raum in der Schleusenkammer oder verdrängtes Volumen geführt zu sein. Dazu sind zweckmäßigerweise geeignete Sensoren vorgesehen, welche die Position des Kolbens erfassen und an die Steuerungseinrichtung weitergeben. Die Sensoren können auch mit einem Antrieb des Kolbens kombiniert sein.

Die Steuerungseinrichtung kann auch dazu ausgebildet sein, Leckagen im Druckraum - die insbesondere im Bereich der verformbaren Membran auftreten können - zu detektieren. Sofern sich bspw. der Druck im Druckraum bei ruhendem Kolben und geschlossenen Absperrorganen ändert oder bei Verfahren des Kolbens vom Ausgangs- zum Endzustand in einem anderen Maße als bei vorherigen Zyklen ohne Leckage zu- oder abnimmt, kann von einer Leckage im Druckraum ausgegangen werden.

Es kann eine Druckmesseinrichtung zur Bestimmung des Umgebungsdrucks vorgesehen sein, die mit der Steuerungseinrichtung verbunden ist. Soll der Kolben so verfahren werden, dass der Druck im Druckraum dem Umgebungsdruck gleicht, kann die Differenz zwischen den beiden Druckmesseinrichtungen für den Umgebungsdruck bzw. dem Druck im Druckraum einfach auf Null geregelt werden.

Darüber hinaus kann ein regelbarer Bypass vorgesehen sein, der dem Druckausgleich zwischen Förderleitung und Druckraum dient. Der Bypass umfasst ein durch die Steuereinrichtung steuerbares Ventil. Wenn die Bewegung des Kolbens nicht ausreicht, um den Druck der Förderleitung im Druckraum herzustellen, kann die verbleibende Druckdifferenz über den Bypass ausgeglichen werden.

Es ist bevorzugt, wenn die verformbare Membran im Zusatzraum aus elastischem Material gefertigt ist. Besonders bewährt hat sich Elastomermaterial, z.B. Gummi oder Silikonkautschuk. Andere Materialien, wie z.B. ein metallischer Faltenbalg oder plastisches Material, sind ebenfalls möglich.

Die Erfindung bezieht sich auch auf eine Anordnung gemäß den Merkmalen des nebengeordneten Anspruchs. Zur Erläuterung der erfindungsgemäßen Anordnung wird auf die vorstehenden Ausführungen verwiesen.

Die Erfindung wird nun anhand von in den Zeichnungen dargestellten Ausführungsbeispielen näher erläutert. Es zeigen:
- Fig. 1:: ein erstes Ausführungsbeispiel einer erfin- dungsgemäßen Fördergutschleuse;
- Fig. 2 a-e: einen möglichen Schleusenzyklus der Förder- schleuse aus Fig. 1;
- Fig. 3 a-d: einen ersten möglichen Förderzyklus einer zwei- ten Ausführungsform einer erfindungsgemäßen Fördergutschleuse;
- Fig. 4 a-c: einen zweiten möglichen Schleusenzyklus der Fördergutschleuse aus Fig. 3; und
- Fig. 5: eine beispielhafte Anordnung einer Fördergut- schleuse aus Fig. 4 und einer pneumatischen Förderanlage.

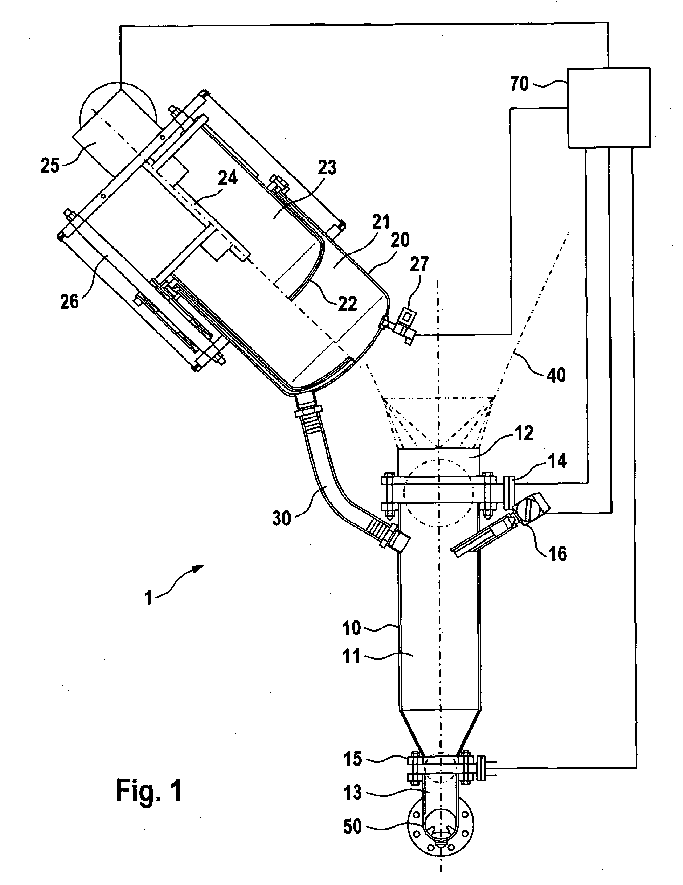

Die Fördergutschleuse 1 aus Fig. 1 umfasst eine Schleusenkammer 10 und eine Zusatzkammer 20. Die Schleusenkammer 10 umschließt einen Schleusenraum 11, an dessen oberen Ende eine Einlassöffnung 12 und an dessen tiefstem Punkt eine Auslassöffnung 13 vorgesehen ist. Sowohl die Einlassöffnung 12 als auch die Auslassöffnung 13 können durch je ein zugehöriges Absperrorgan 14, 15 druckdicht verschlossen werden.

Die Zusatzkammer 20 umschließt einen Zusatzraum 21. Eine den Zusatzraum 21 begrenzende Wand 22 ist als Elastomermembran 22 ausgeführt. Des Weiteren ist im Bereich der Zusatzkammer 20 ein Kolben 23 vorgesehen, der so auf die Elastomermembran 22 einwirken kann, dass diese sich in den Zusatzraum 21 hineinverformt. Das Volumen des Zusatzraums 21 kann dadurch verändert werden. In Fig. 1 ist oberhalb der Linie 24 der Kolben 23 in Ausgangslage dargestellt. Bei dieser Position des Kolbens 23 ist das Volumen des Zusatzraums 21 maximal. Unterhalb der Linie 24 ist der Kolben 23 in seiner maximalen Endposition dargestellt. Bei dieser Position des Kolbens 23 ist das Volumen des Zusatzraums 21 minimal.

Das Verfahren des Kolbens 23 wird durch einen Antrieb 25 gewährleistet. Der Antrieb 25 muss hohe Haltekräfte aufbringen können, während nur geringe Anforderungen an die Bewegungskraft des Antriebes 25 gestellt werden. Insgesamt ist also nur eine sehr geringe Antriebsleistung erforderlich.

Der Antrieb 25 - und damit der Kolben 23 - wird von einer Steuerungseinrichtung 70 angesteuert, die außerdem noch die Stellung der Absperrorgane 14, 15 steuern kann. Der Kolben 23 ist durch eine geeignete Lagerung 26 geführt.

Der Zusatzraum 21 und der Schleusenraum 11 sind durch eine Druckausgleichsleitung 30 miteinander verbunden. Der Zusatzraum 21 und Schleusenraum 11 bilden daher einen gemeinsamen Druckraum, der bei geschlossenen Absperrvorrichtungen 14, 15 auch druckdicht ist. Durch Verfahren des Kolbens 23 wird also nicht nur das Volumen des Zusatzraums 21, sondern auch das Volumen des gesamten Druckraums verändert.

Verändert sich das Volumen des Druckraums, während die Absperrorgane 14, 15 geschlossen sind, so verändert sich der Druck des im Druckraum befindlichen Gases. Wird das Volumen verringert, erhöht sich der Druck; bei zunehmendem Volumen nimmt der Druck ab. Der Querschnitt der Druckausgleichsleitung 30 ist dabei so gewählt, dass bei Verfahren des Kolbens 23 und damit einhergehender Druckanpassung im Druckraum hohe Strömungsgeschwindigkeiten in der Druckausgleichsleitung 30 vermieden werden. So kann Strömungsverlusten und Verschleißerscheinungen wirksam entgegengetreten werden.

An der Zusatzkammer 20 ist eine Druckmesseinrichtung 27 vorgesehen, die mit der Steuerungseinrichtung 70 verbunden ist und mit der es möglich ist, den Druck im Zusatzraum 21 zu bestimmen. Da - wie angegeben - der Zusatzraum 21 und der Schleusenraum 11 gemeinsam den Druckraum bilden, lässt sich über die Druckmesseinrichtung 27 der Druck im Druckraum bestimmen.

An der Schleusenkammer 10 ist ein Füllstandssensor 16 vorgesehen, der ebenfalls mit der Steuerungseinrichtung 70 verbunden ist. Mit diesem Füllstandssensor 16 ist es möglich, die Menge des in dem Schleusenraum 11 befindlichen Schüttguts zu bestimmen. Dabei kann vorgesehen sein, dass der Füllstandssensor 16 in der Lage ist, jeden beliebigen Füllstand in dem Schleusenraum 11 tatsächlich zu bestimmen. Dies kann bspw. durch Messung des Gewichtes der gesamten Schleusenkammer 10 realisiert werden; die Differenz zwischen gemessenem Gewicht und Leergewicht der Schleusenkammer 10 gibt Aufschluss über den Füllstand. Alternativ können optische, akustische oder Mikrowellen-Sensoren vorgesehen sein, die den Füllstand aufgrund einer Entfernungsmessung zwischen Sensor und Oberfläche des im Schleusenraum 10 befindlichen Schüttgutes bestimmen. Es ist aber ausreichend, wenn der Füllstandssensor 16 in der Lage ist, eine Aussage darüber zu treffen, ob ein bestimmter Füllstand im Schleusenraum 11 erreicht ist oder nicht. Hierfür ist bspw. eine Lichtschranke geeignet.

Die Fördergutschleuse 1 aus Fig. 1 ist mit ihrer Einlassöffnung 12 an einen Schüttgutbunker 40 angeschlossen. Aus diesem Schüttgutbunker 40 gelangt Schüttgut allein aufgrund der Schwerkraft bei geöffnetem Absperrorgan 14 in den Schleusenraum 11. An seiner Auslassöffnung 13 ist die Fördergutschleuse 1 mit einer pneumatischen Fördergutleitung 50 verbunden. Sofern das Absperrorgan 15 geöffnet ist, kann im Schleusenraum 11 befindliches Schüttgut allein aufgrund der Schwerkraft vom Schleusenraum 11 in die Förderleitung 50 gelangen.

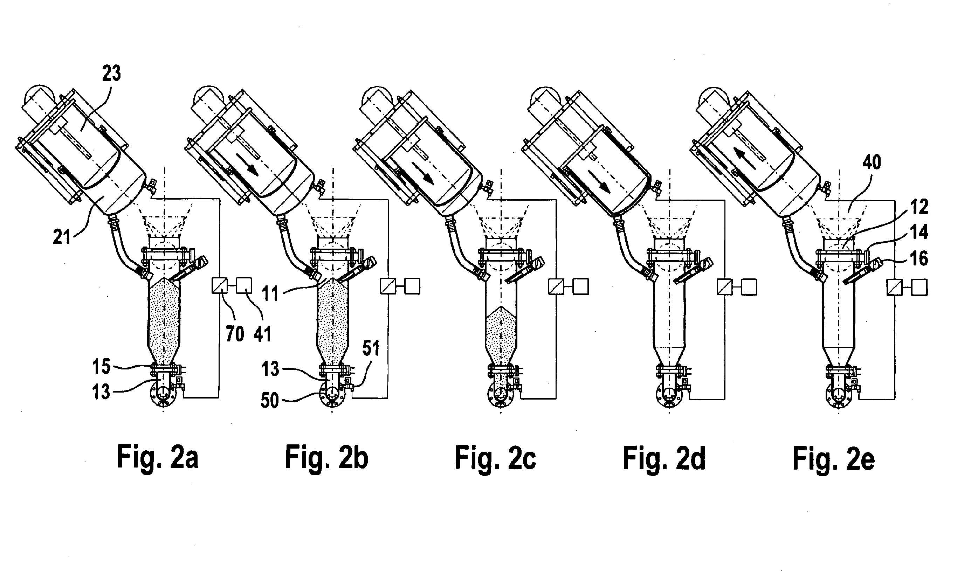

Eine mögliche Betriebsweise einer Fördergutschleuse 1 ähnlich der aus Fig. 1 wird nun anhand der Figuren 2a-e erläutert, die einen möglichen Schleusenzyklus darstellen, wobei aus Gründen der Übersichtlichkeit nicht alle Steuerungsleitungen zwischen der Steuerungseinrichtung 70 und den mit ihr verbundenen Komponenten dargestellt sind.

Zu Beginn des Schleusenzyklusses (in Fig. 2a dargestellt) befindet sich der Kolben 23 in Ausgangsposition. Das Volumen des Zusatzraums 21 ist somit maximal. Das Absperrorgan 15 an der Auslassöffnung 13 ist geschlossen. Im Druckraum - d.h. Zusatzraum 21 sowie Schleusenraum 11 - herrscht Umgebungsdruck, auch weil das Absperrorgan 14 an der Einlassöffnung 12 geöffnet ist.

Durch die Einlassöffnung 12 gelangt nun Schüttgut allein aufgrund der Schwerkraft vom Schüttgutbehälter 40 in die Schleusenkammer 11. Sobald mit Hilfe des Füllstandssensors 16 das Erreichen einer bestimmten Füllhöhe im Schleusenraum festgestellt wird, schließt die Steuerungseinrichtung 70 das Absperrorgan 14 an der Einlassöffnung 12. Der Druckraum ist nun druckdicht verschlossen.

Der Kolben 23 wird nun (wie in Fig. 2b dargestellt) so verfahren, dass sich das Volumen des Zusatzraums 21 und damit des gesamten Druckraums verringert. Da der Druckraum druckdicht ist, wird das sich neben dem Schüttgut im Schleusenraum 11 und im Zusatzraum 21 befindliche Gas komprimiert. Der Druck im Druckraum nimmt also zu. Der Kolben 23 wird durch die Steuerungseinrichtung 70 soweit verfahren, bis der Druck im Druckraum dem Druck in der Förderleitung 50 entspricht. Der Druck im Druckraum kann dabei durch die Druckmesseinrichtung 27 festgestellt werden. Es ist möglich, den Druck im Druckraum auf einen vorher festgelegten Wert zu regeln. Besonders bevorzugt ist es aber, den Druck im Druckraum an den tatsächlichen Druck in der Förderleitung 50 anzupassen. Dazu kann an der Förderleitung im Bereich der Stelle, wo die Auslassöffnung 13 mündet, eine Druckmesseinrichtung 51 vorgesehen sein. Der Kolben 23 wird soweit verfahren, bis die Druckmesseinrichtungen 27 und 51 den gleichen Druck detektieren. Die Steuerungseinrichtung 70 ist dafür ausgebildet, die Messwerte der beiden Druckmesseinrichtungen 27 und 51 zu vergleichen. Es ist auch möglich, das Messsignal einer bereits in der Druckförderanlage vorhandenen Druckmesseinrichtung zu verwenden. Bei Druckförderanlagen ist häufig im Bereich des Druckerzeugers eine solche geeignete Druckmesseinrichtung vorgesehen.

Sobald in dem Druckraum der gleiche Druck wie in der Förderleitung 50 herrscht, wird das Absperrorgan 15 an der Auslassöffnung 13 durch die Steuerungseinrichtung 70 geöffnet (s. Fig. 2c). Das im Schleusenraum 11 befindliche Schüttgut kann dann allein aufgrund der Schwerkraft in die Förderleitung 50 gelangen. Die Austragung des Schüttguts im Schleusenraum 11 in die Förderleitung 50 kann unterstützt werden, indem der Kolben 23 weiter verfahren wird, bis das Volumen des Zusatzraums 21 minimal ist. Dadurch entsteht kurzzeitig im Bereich des Druckraums ein Überdruck gegenüber der Förderleitung 50, durch den das Schüttgut in die Förderleitung 50 "gedrückt" wird.

Nachdem das gesamte Schüttgut aus dem Schleusenraum 11 in die Förderleitung 50 gelangt ist, schließt die Steuerungseinrichtung 70 das Absperrorgan 15 an der Auslassöffnung 13 wieder. Zu diesem Zeitpunkt herrscht in dem nunmehr wieder druckdichten Druckraum der Druck der Förderleitung 50. Durch Verfahren des Kolbens 23 in Richtung seiner Ausgangsposition (vgl. Fig. 2a) wird das Volumen des Druckraums wieder vergrößert, wodurch sich das darin enthaltene Gas entspannen kann. Der Druck nimmt also ab. Sobald der Druck im Druckraum wieder Umgebungsdruck erreicht hat, kann das Absperrorgan 14 an der Einlassöffnung 12 wieder geöffnet werden. Die Steuerungseinrichtung 70 kann dabei den Druck auf einen festgelegten Wert, der einem Standard-Umgebungsdruck entspricht, regeln. Es ist aber auch möglich, dass eine Druckmesseinrichtung 41 zur Bestimmung des Umgebungsdruckes vorgesehen ist, und die Steuerungseinrichtung 70 die Differenz zwischen Druck im Druckraum und dem gemessenen Umgebungsdruck auf Null regelt. Der Schleusenzyklus kann dann von neuem beginnen.

Sofern sich der Kolben 23 beim erneuten Öffnen des Absperrorgans 14 an der Einlassöffnung 12 nicht in seiner Ausgangsposition aus Fig. 2a befindet, kann er bei geöffneter Einlassöffnung 12 ohne weiteres in diese Position verfahren werden. Der Steuerungseinrichtung 70 ist die genaue Position des Kolbens vorzugsweise bekannt. Eine merkliche Druckänderung im - dann nicht druckdichten - Druckraum ergibt sich hieraus nicht. Es ist auch möglich, dass der Kolben 23 bei geschlossenem Absperrorgan 14 an der Einlassöffnung 12 in seine ursprüngliche Lage aus Fig. 2a zurück verfahren wird. Dabei kann im Druckraum ein Unterdruck entstehen, der das erneute Befüllen des Schleusenraums 11 mit Schüttgut aus dem Schüttgutbehälter 40 beschleunigen kann. Zur Erzeugung eines solchen Unterdruckes kann der Kolben 23 natürlich auch in eine beliebige andere, dafür geeignete Position verfahren werden.

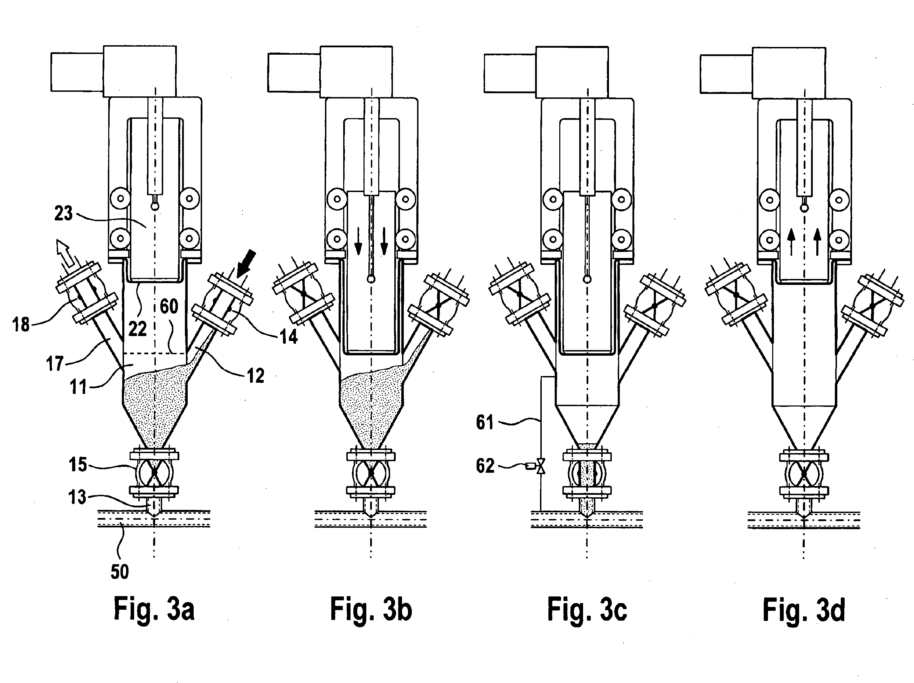

In den Figuren 3a-d ist eine zweite Ausführungsform einer Fördergutschleuse 1 bzw. ein möglicher Schleusenzyklus dieser Fördergutschleuse 1 dargestellt. Auf die Darstellung der Steuerungseinrichtung 70 wurde aus Gründen der Übersichtlichkeit verzichtet.

Die Fördergutschleuse 1 aus Fig. 3a-d unterscheidet sich im Wesentlichen von der Fördergutschleuse aus Fig. 1 dadurch, dass der Zusatzraum 21 integral mit dem Schleusenraum 11 verbunden ist. Die beiden Räume werden von der gleichen Kammer umschlossen, wodurch es einer Druckausgleichsleitung 30 (in Fig. 1) nicht mehr bedarf. Dennoch lassen sich Zusatzraum 21 und Schleusenraum 11 eindeutig voneinander trennen, was in Fig. 3a durch die eine maximal vorgerückte Position des Kolbens 23 abbildende Linie 60 angedeutet ist. Ansonsten gleicht der Aufbau der Förderdruckschleuse 1 aus Fig. 3a der Fördergutschleuse 1 aus Fig. 1 insbesondere im Hinblick auf die Elastomermembran 22 und den Kolben 23, weshalb auf die obigen Ausführungen verwiesen wird.

Schüttgut gelangt durch die Einlassöffnung 12 bei geöffnetem Absperrorgan 14 in den Schleusenraum 11. Bei dem Befüllungsvorgang eventuell entstehender Staub kann durch die Entstaubungsleitung 17 abgesaugt werden (vgl. Fig. 3a). Sobald der Schleusenraum 11 - nicht jedoch der Zusatzraum 21 - ausreichend mit Schüttgut befüllt ist, werden die Absperrorgane 14, 18 an der Einlassöffnung bzw. der Entstaubungsleitung durch die Steuerungseinrichtung 70 geschlossen. Der aus Schleusenraum 11 und Zusatzraum 21 gebildete Druckraum ist nun druckdicht.

Die Steuerungseinrichtung 70 verfährt den Kolben 23 nun so (vgl. Fig. 3b), dass sich das Volumen des Druckraums soweit ändert, bis im Druckraum der Druck der Förderleitung herrscht. Der Druck im Druckraum wird dabei nicht direkt gemessen sondern die Steuerungseinrichtung 70 ist dazu ausgebildet, den Druck über die Position des Kolbens 23 zu berechnen. Ansonsten wird auf die Ausführung zu Fig. 2 verwiesen.

Nach Erreichen des Förderdrucks öffnet die Steuerungseinrichtung 70 das Absperrorgan 15 an der Auslassöffnung 13 und das Schüttgut kann vom Schleusenraum 11 in die Förderleitung 50 gelangen (vgl. Fig. 3c). Sollte die Herstellung des Förderdrucks im Druckraum nicht allein aufgrund der Bewegung des Kolbens 23 erreicht werden können oder es kommt zu Abweichungen aufgrund ungenauer Druckabschätzung, kann außerdem ein Bypass 61 vorgesehen sein, mit dem saubere Förderluft aus der Förderleitung 50 in den Druckraum geleitet werden kann. Dieser Bypass ist durch ein Ventil 62 regelbar und dient dem Druckausgleich zwischen Förderleitung 50 und Druckraum.

Nachdem das Schüttgut vollständig aus dem Schleusenraum 11 in die Förderleitung 50 gelangt ist, schließt die Steuerungseinrichtung 70 das Absperrorgan 15 wieder. Der Druck im Druckraum wird durch erneutes Verfahren des Kolbens 23 wieder auf Umgebungsdruck gebracht und der Schleusenzyklus kann von neuem beginnen.

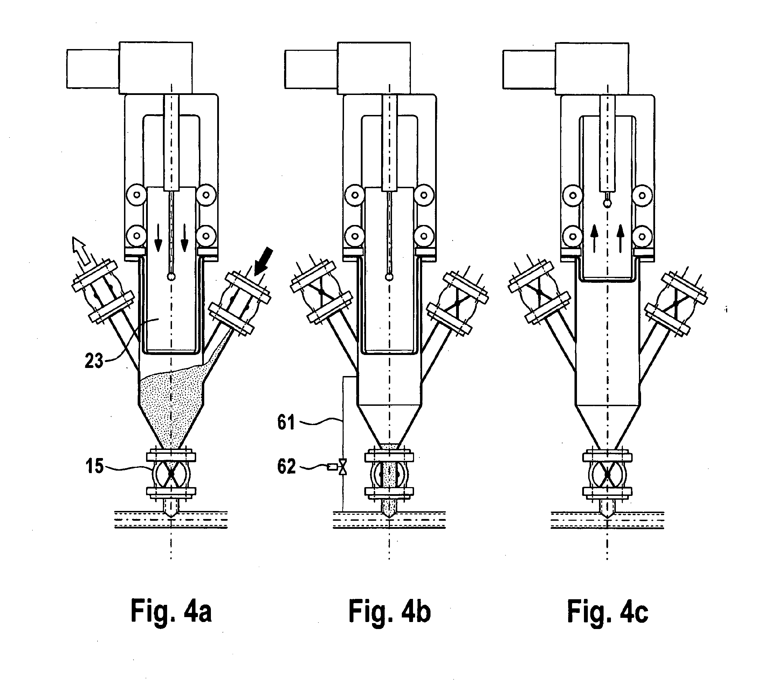

In Fig. 4a-c ist ein anderer möglicher Schleusenzyklus für die Fördergutschleuse aus Fig. 3a-d dargestellt. Auf die Darstellung der Steuerungseinrichtung 70 wurde aus Gründen der Übersichtlichkeit hier ebenfalls verzichtet. Die Befüllung in Fig. 4a gleicht der Befüllung aus Fig. 3a mit maximal vorgerücktem Kolben 23, weshalb auf die obigen Ausführungen verwiesen wird.

Nach erfolgter Befüllung des Schleusenraums 11 und Schließen der Absperrorgane 14 und 18 durch die Steuerungseinrichtung 70 wird durch einen Bypass 61 saubere Förderluft aus der Förderleitung 50 in den Schleusenraum 11 geleitet (vgl. Fig. 4b). Dadurch wird im Schleusenraum 11 Förderdruck hergestellt und das Absperrorgan 15 wird geöffnet. Alternativ ist es möglich, den Förderdruck herzustellen, indem das Absperrorgan 15 an der Auslassöffnung 13 geöffnet wird, obwohl eine Druckdifferenz zwischen Schleusenraum 11 und Förderleitung 50 besteht.

Nachdem das Schüttgut vollständig in die Förderleitung 50 gelangt ist, schließt die Steuerungseinrichtung 70 das Absperrorgan 15 an der Auslassöffnung 13. Der nunmehr verschlossene Druckraum wird durch Verfahren des Kolbens 23 vergrößert (vgl. Fig. 4c). Dadurch nimmt der Druck ab, und zwar vom Druck in der Förderleitung bis auf den Umgebungsdruck. Die Absperrorgane 14 und 18 können dann wieder geöffnet werden und der Schleusenraum 11 kann wieder befüllt werden. Während des Befüllungsvorgangs wird der Kolben 23 durch die Steuerungseinrichtung 70 wieder in eine solche Position verfahren, wie in Fig. 4a dargestellt.

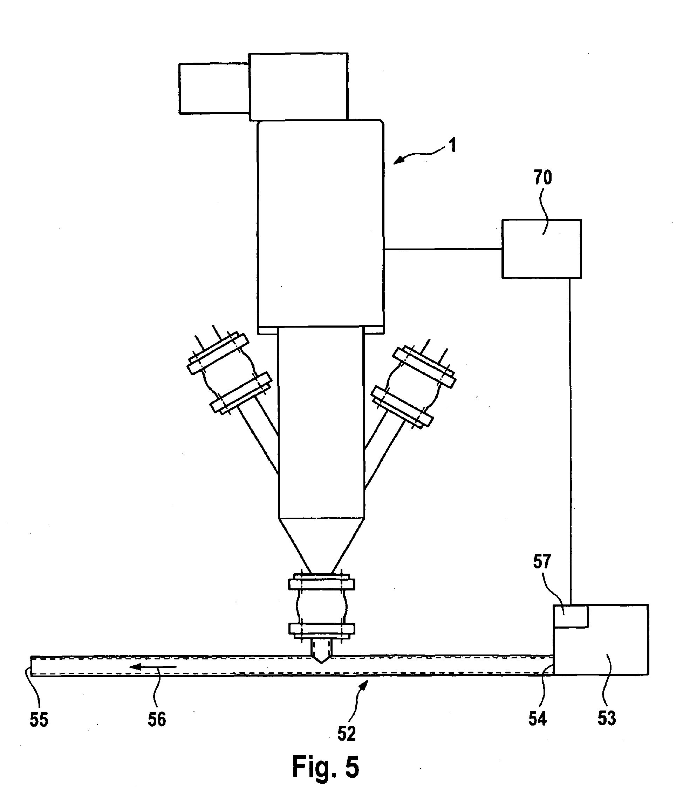

In Fig. 5 ist eine Fördergutschleuse 1, wie sie aus Fig. 3 bzw. Fig. 4 bekannt ist, an einer pneumatischen Fördereinrichtung 52 angeordnet. Zur näheren Erläuterung der Fördergutschleuse 1 wird auf obige Ausführungen verwiesen.

Die Steuereinrichtung 70 ist entfernt von der Fördergutschleuse 1 positioniert und ist mit ihr verbunden. Die Verbindung kann dabei durch Kabel oder über Funk hergestellt werden.

Es ist auch möglich, dass die Steuerungseinrichtung 70 mehrere Fördergutschleusen 1 steuert. Dadurch ist es möglich, die Schleusenzyklen der einzelnen Fördergutschleusen 1 so zeitlich versetzt zueinander ablaufen zu lassen, dass die Schüttguteinbringung in die Förderleitung 50 in nahezu konstanter Rate erfolgt. Dies kann beispielweise erreicht werden, indem zu jedem Zeitpunkt das Absperrorgan 15 an der Auslassöffnung 13 einer ersten Fördergutschleuse 1 geöffnet ist und durch diese Auslassöffnung 13 Schüttgut in die Förderleitung 50 gelangt. Sobald der Schüttgutstrom aus der ersten Fördergutschleuse 1 versiegt, öffnet sich das Absperrorgan 15 an der Auslassöffnung 13 einer zweiten Fördergutschleuse. Der resultierende Schüttgutstrom bleibt nahezu konstant.

Die pneumatische Förderanlage 52 umfasst neben der Förderleitung 50 noch einen Druckerzeuger 53, der in der Lage ist, am kompressorseitigen Ende 54 der Förderleitung 50 einen Überdruck gegenüber der Umgebung in der Förderleitung 50 herzustellen. Das andere Ende 55 der Förderleitung 50 ist in dem dargestellten Beispiel frei, d.h. an diesem Ende liegt z.B. Umgebungsdruck an.

Indem am kompressorseitigen Ende 54 der Förderleitung 50 ein
Überdruck gegenüber der Umgebung und damit gegenüber dem Druck am anderen Ende 55 der Förderleitung 50 herrscht, kommt es in der Förderleitung 50 zu einer Gasströmung in Richtung des Pfeils 56. Wird über die Fördergutschleuse 1 Schüttgut in die Förderleitung 50 eingebracht, so wird dieses von der Gasströmung erfasst und zum Ende 55 der Förderleitung 50 hin mitgerissen. Es kommt also zu einer Schüttgutförderung in Richtung des Pfeils 56.

Der Druckerzeuger 53 verfügt über eine Regelungseinrichtung 57, über die unter anderem der Druck am kompressorseitigen Ende 54 der Förderleitung 50 geregelt wird. Dabei ist unerheblich, ob dieser Druck durch eine entsprechende Einrichtung gemessen wird oder aus sonstigen Betriebsdaten des Kompressors berechnet wird.

Der Druck am kompressorseitigen Ende 54 der Förderleitung 50 kann der Steuerungseinrichtung 70 von der Regelungseinrichtung 57 des Kompressors 53 zur Verfügung gestellt werden. Unter Berücksichtigung der Druckverluste entlang der Förderleitung 50 kann die Steuerungseinrichtung 70 den Druck im Bereich der Aufgabestelle der Fördergutschleuse 1 in die Förderleitung 50 bestimmen. Der Schleusenzyklus und insbesondere die Druckanpassung im Druckraum der Förderschleuse 1 kann dann auf diesen Druck eingestellt werden. Eine Druckmesseinrichtung 51 (vgl. Fig. 2) wird dann nicht benötigt.

## Patentansprüche

1. Fördergutschleuse zur Einbringung von Schüttgut in eine pneumatische Förderanlage, umfassend eine einen Schleusenraum (11) zur Aufnahme von Schüttgut umschließende Schleusenkammer (10) mit einer durch ein erstes Absperrorgan (14) verschließbaren Einlassöffnung (12) und einer durch ein zweites Absperrorgan (15) verschließbaren Auslassöffnung (13), und einer Steuerungseinrichtung (70) zur Steuerung der Absperrorgane (14, 15) und wobei
eine Zusatzkammer (20) vorgesehen ist, die einen Zusatzraum (21) umschließt, der mit dem Schleusenraum (11) druckausgleichend verbunden ist **dadurch gekennzeichnet, dass** der Zusatzraum (21) und der Schleusenraum (11) bei geschlossenen Absperrorganen (14, 15) einen druckdichten Druckraum bilden, wobei wenigstens eine Wand des Zusatzraumes (21) durch eine verformbare Membran (22) gebildet ist und durch einen durch die Steuerungseinrichtung (70) ansteuerbaren, außerhalb des Zusatzraumes (21) angeordneten und auf die Membran (22) wirkenden Kolben (23) variabel verformbar ist.

2. Fördergutschleuse nach Anspruch 1,
**dadurch gekennzeichnet, dass**
Schleusenraum (11) und Zusatzraum (21) durch eine Druckausgleichsleitung (30) miteinander verbunden sind.

3. Fördergutschleuse nach Anspruch 1,
**dadurch gekennzeichnet, dass**
Schleusenraum (11) und Zusatzraum (21) integral verbunden sind.

4. Fördergutschleuse nach einem der vorhergehenden Ansprüche,
**dadurch gekennzeichnet, dass**
die Einlassöffnung (12) geodätisch über der Auslassöffnung (13) angeordnet ist, wobei vorzugsweise die Auslassöffnung (13) am geodätisch tiefsten Punkt des Schleusenraumes (11) angeordnet ist.

5. Fördergutschleuse nach einem der vorhergehenden Ansprüche,
**dadurch gekennzeichnet, dass**
an der Schleusenkammer (10) ein Füllstandssensor (16) zur Messung des Füllstandes des Schüttgutes im Schleusenraum (11) vorgesehen ist und der Füllstandssensor (16) mit der Steuerungseinrichtung (70) verbunden ist.

6. Fördergutschleuse nach einem der vorhergehenden Ansprüche,
**dadurch gekennzeichnet, dass**
eine Druckmesseinrichtung (27) zur Messung des Druckes im Druckraum vorgesehen ist, wobei die Druckmesseinrichtung (27) vorzugsweise an der Zusatzkammer (20) zur Messung des Druckes im Zusatzraum (21) angeordnet ist, und diese Druckmesseinrichtung (27) mit der Steuerungseinrichtung (70) verbunden ist.

7. Fördergutschleuse nach Anspruch 6,
**dadurch gekennzeichnet, dass**.
eine Druckmesseinrichtung (41) zur Messung des Zieldruckes (z.B. Umgebungsdruckes) vorgesehen und diese Druckmesseinrichtung (41) mit der Steuerungseinrichtung (70) verbunden ist.

8. Fördergutschleuse nach einem der vorhergehenden Ansprüche,
**dadurch gekennzeichnet, dass**
ein Bypass (61) mit einem durch die Steuerungseinrichtung (70) steuerbaren Ventil (62) zum Druckausgleich zwischen Förderleitung und Druckraum vorgesehen ist.

9. Fördergutschleuse nach einem der vorhergehenden Ansprüche,
**dadurch gekennzeichnet, dass**
das die verformbare Membran (22) aus einem elastischen Material besteht.

10. Fördergutschleuse nach Anspruch 9,
**dadurch gekennzeichnet, dass**
das elastische Material ein Elastomermaterial, insbesondere Gummi oder Silikonkautschuk ist.

11. Anordnung zum Einbringen von Schüttgut in eine pneumatische Förderanlage umfassend einen Zufuhrbehälter (40), eine Fördergutschleuse (1) gemäß Anspruch 1 und eine pneumatische Förderleitung (50), wobei der Zufuhrbehälter (40) mit der Einlassöffnung (12) der Fördergutschleuse (1) verbunden ist und die Auslassöffnung (13) der Fördergutschleuse (1) in die pneumatische Fördergutleitung (50) mündet.

12. Anordnung nach Anspruch 11,
**dadurch gekennzeichnet, dass**
die Fördergutschleuse (1) gemäß einem der Ansprüche 1 bis 10 ausgebildet ist.

13. Anordnung nach Anspruch 11 oder 12,
**dadurch gekennzeichnet, dass**
eine Druckmesseinrichtung (51) zur Messung des Druckes in der pneumatischen Förderleitung (50) vorgesehen ist, wobei die Druckmesseinrichtung (51) mit der Steuerungseinrichtung (70) der Fördergutschleuse (1) verbunden ist.

14. Anordnung nach einem der Ansprüche 11 bis 13,
**dadurch gekennzeichnet, dass**
die Steuerungseinrichtung (70) dazu ausgebildet ist, den Kolben (23) soweit bis zu seinem Endzustand zu bewegen, dass für die Schleusenkammer (10) ein aus der Gruppe umfassend Raum, Volumen und Druck ausgewählter Zielparameter erreicht ist.

## Claims

1. Loads sluice for the introduction of bulk material into a pneumatic conveying installation, comprising a sluice chamber (10) surrounding a sluice space (11) for the reception of bulk material, with an inlet port (12) closable by means of a first shut-off member (14) and an outlet port (13) closable by means of a second shut-off member (15) and with a control device (70) for controlling the shut-off members (14, 15), and an additional chamber (20) being provided, which surrounds an additional space (21) connected in a pressure-compensating manner to the sluice space (11),
**characterized in that**
the additional space (21) and the sluice space (11) form a pressure-tight pressure space when the shut-off members (14, 15) are closed, at least one wall of the additional space (21) being formed by a deformable diaphragm (22) and being variably deformable by means of a piston (23) which is activatable by the control device (70) and is arranged outside the additional space (21) and which acts upon the diaphragm (22).

2. Loads sluice according to Claim 1, **characterized in that** the sluice space (11) and additional space (21) are connected to one another by means of a pressure-compensating line (30).

3. Loads sluice according to Claim 1, **characterized in that** the sluice space (11) and additional space (21) are connected integrally.

4. Loads sluice according to one of the preceding claims, **characterized in that** the inlet port (12) is arranged geodetically above the outlet port (13), the outlet port (13) preferably being arranged at the geodetically lowest point of the sluice space (11).

5. Loads sluice according to one of the preceding claims, **characterized in that** a filling-level sensor (16) for measuring the filling level of the bulk material in the sluice space (11) is provided on the sluice chamber (10), and the filling-level sensor (16) is connected to the control device (70).

6. Loads sluice according to one of the preceding claims, **characterized in that** a pressure-measuring device (27) for measuring the pressure in the pressure space is provided, the pressure-measuring device (27) preferably being arranged on the additional chamber (20) in order to measure the pressure in the additional space (21), and this pressure-measuring device (27) being connected to the control device (70).

7. Loads sluice according to Claim 6, **characterized in that** a pressure-measuring device (41) for measuring the target pressure (for example, ambient pressure) is provided, and this pressure-measuring device (41) is connected to the control device (70).

8. Loads sluice according to one of the preceding claims, **characterized in that** a bypass (61) with a valve (62), controllable by means of the control device (70), is provided for pressure compensation between the conveying line and pressure space.

9. Loads sluice according to one of the preceding claims, **characterized in that** the deformable diaphragm (22) consists of an elastic material.

10. Loads sluice according to Claim 9, **characterized in that** the elastic material is an elastomeric material, in particular rubber or silicone rubber.

11. Arrangement for the introduction of bulk material into a pneumatic conveying installation, comprising a feed container (40), a loads sluice (1) according to Claim 1 and a pneumatic conveying line (50), the feed container (40) being connected to the inlet port (12) of the loads sluice (1), and the outlet port (13) of the loads sluice (1) issuing into the pneumatic conveying line (50).

12. Arrangement according to Claim 11, **characterized in that** the loads sluice (1) is designed according to one of Claims 1 to 10.

13. Arrangement according to Claim 11 or 12, **characterized in that** a pressure-measuring device (51) for measuring the pressure in the pneumatic conveying line (50) is provided, the pressure-measuring device (51) being connected to the control device (70) of the loads sluice (1).

14. Arrangement according to one of Claims 11 to 13, **characterized in that** the control device (70) is designed to move the piston (23) as far as its final state until a target parameter selected from the group comprising space, volume and pressure is achieved for the sluice chamber (10).

## Revendications

1. Sas pour produits à transporter permettant d'introduire des produits en vrac dans une installation de transport pneumatique, comportant une chambre (10) qui entoure une enceinte (11), destinée à recevoir le produit en vrac, et munie d'une ouverture d'entrée (12), pouvant être fermée par un premier organe de fermeture (14), et d'une ouverture de sortie (13) pouvant être fermée par un deuxième organe de fermeture (15), et un dispositif de commande (70) destiné à commander les organes de fermeture (14, 15), et une chambre supplémentaire (20) étant prévue, laquelle entoure une enceinte supplémentaire (21) qui est reliée à l'enceinte (11) de manière à équilibrer la pression,
**caractérisé en ce que**
l'enceinte supplémentaire (21) et l'enceinte (11) forment une chambre sous pression lorsque les organes de fermeture (14, 15) sont fermés, au moins une paroi de l'enceinte supplémentaire (21) étant formée par une membrane (22) déformable et étant apte à être déformée de manière variable par un piston (23), propre à être commandé par le dispositif de commande (70), agencé en dehors de l'enceinte supplémentaire (21) et agissant sur la membrane (22).

2. Sas pour produits à transporter selon la revendication 1, **caractérisé en ce que** l'enceinte (11) et l'enceinte supplémentaire (21) sont reliées l'une à l'autre via une conduite d'équilibrage de la pression (30).

3. Sas pour produits à transporter selon la revendication 1, **caractérisé en ce que** l'enceinte (11) et l'enceinte supplémentaire (21) sont reliées intégralement.

4. Sas pour produits à transporter selon l'une quelconque des revendications précédentes, **caractérisé en ce que** l'ouverture d'entrée (12) est disposée géodésiquement au-dessus de l'ouverture de sortie (13), de préférence l'ouverture de sortie (13) étant disposée géodésiquement au point le plus bas de l'enceinte (11).

5. Sas pour produits à transporter selon l'une quelconque des revendications précédentes, **caractérisé en ce que** sur la chambre (10) est prévu un capteur de niveau (16) destiné à mesurer le niveau du produit en vrac dans l'enceinte (11), et le capteur de niveau (16) est relié au dispositif de commande (70).

6. Sas pour produits à transporter selon l'une quelconque des revendications précédentes, **caractérisé en ce qu'**il est prévu un dispositif de mesure de la pression (27) destiné à mesurer la pression dans la chambre sous pression, ledit dispositif de mesure de la pression (27) étant agencé de préférence au niveau de l'enceinte supplémentaire (20) pour mesurer la pression à l'intérieur de l'enceinte supplémentaire (21), et ledit dispositif de mesure de la pression (27) est relié au dispositif de commande (70).

7. Sas pour produits à transporter selon la revendication 6, **caractérisé en ce qu'**il est prévu un dispositif de mesure de la pression (41) destiné à mesurer la pression cible (par exemple, pression ambiante) et ledit dispositif de mesure de la pression (41) est relié au dispositif de commande (70).

8. Sas pour produits à transporter selon l'une quelconque des revendications précédentes, **caractérisé en ce qu'**il est prévu un by-pass (61) avec une vanne (62), qui peut être commandée par le dispositif de commande (70) et qui est destinée à équilibrer la pression entre la conduite de transport et la chambre sous pression.

9. Sas pour produits à transporter selon l'une quelconque des revendications précédentes, **caractérisé en ce que** la membrane (22) déformable est réalisée dans un matériau élastique.

10. Sas pour produits à transporter selon la revendication 9, **caractérisé en ce que** le matériau élastique est un élastomère, en particulier un caoutchouc ou un caoutchouc de silicone.

11. Dispositif permettant d'introduire un produit en vrac dans une installation de transport pneumatique, comportant un réservoir d'alimentation (40), un sas (1) selon la revendication 1 et une conduite de transport pneumatique (50), le réservoir d'alimentation (40) étant relié à l'ouverture d'entrée (12) du sas (1), et l'ouverture de sortie (13) du sas (1) débouchant dans la conduite de transport pneumatique (50).

12. Dispositif selon la revendication 11, **caractérisé en ce que** le sas (1) est configuré selon l'une quelconque des revendications 1 à 10.

13. Dispositif selon la revendication 11 ou 12, **caractérisé en ce qu'**il est prévu un dispositif de mesure de la pression (51) destiné à mesurer la pression dans la conduite de transport pneumatique (50), ledit dispositif de mesure de la pression (51) étant relié au dispositif de commande (70) du sas (1).

14. Dispositif selon l'une quelconque des revendications 11 à 13, **caractérisé en ce que** le dispositif de commande (70) est configuré pour déplacer le piston (23) jusqu'à sa position finale, de manière à obtenir pour la chambre (10) du sas un paramètre cible choisi dans le groupe contenant l'espace, le volume et la pression.
